(19) Europäisches Patentamt
European Patent Office
Office européen des brevets

(11) **EP 4 098 941 A1**

(12) **EUROPEAN PATENT APPLICATION**
published in accordance with Art. 153(4) EPC

(43) Date of publication:
**07.12.2022 Bulletin 2022/49**

(21) Application number: **21747711.6**

(22) Date of filing: **25.01.2021**

(51) International Patent Classification (IPC):
**F21Y 115/10** (2016.01)    **G02B 5/02** (2006.01)
**F21S 2/00** (2016.01)

(52) Cooperative Patent Classification (CPC):
**F21S 2/00; G02B 5/02;** F21Y 2115/10

(86) International application number:
**PCT/JP2021/002424**

(87) International publication number:
**WO 2021/153496 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 JP 2020014744**

(71) Applicant: **AGC INC.**
**Chiyoda-ku,**
**Tokyo 1008405 (JP)**

(72) Inventors:
• **KAWAI, Yohei**
  **Tokyo 100-8405 (JP)**
• **HIJIYA, Hiroyuki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **ILLUMINATION BODY HAVING LIGHT SOURCE**

(57)    The present invention pertains to an illumination body provided with a light source, the illumination body including a particle dispersion configured from a matrix and particles, and a light-generating device, an end surface of the particle dispersion being irradiated with light by the light-generating device, wherein the length of the particle dispersion in the direction in which light passes from the light-generating device, the difference in refractive index between the matrix and the particles, the average particle diameter, half width and density of the particles, and the amount of change per 200 mm of the dominant wavelength Dw in the direction in which light passes from the light-generating device are in specific ranges.

FIGURE

EP 4 098 941 A1

**Description**

TECHNICAL FIELD

The present invention relates to an illumination body having a light source.

BACKGROUND ART

For example, a vehicular glass disclosed in Patent document 1 and an illumination glass disclosed in Patent document 2 are known as glass plates that are equipped with a light source such as an LED. These glass plates are equipped with a glass plate, a light source that is disposed to face an end surface of the glass plate and irradiates the end surface of the glass plate with light, and a light scattering film or structure that is disposed on the side of one major surface of the glass plate.

The light entering from the end surface of the glass plate propagates through the inside of the glass plate and is guided to the other major surface by the light scattering film or structure. For example, these glass plates make it possible to produce a virtual space by projecting particular decorative elements or colors as interior elements or to project meter functions on a vehicle window.

CITATION LIST

PATENT LITERATURE

Patent document 1: US 2015/0298601
Patent document 2: JP-T-2015-525429

SUMMARY OF INVENTION

TECHNICAL PROBLEM

Providing a transparent body such as a glass plate with a scattering body, Patent documents 1 and 2 realize satisfactory light scattering performance when being irradiated with light. On the other hand, it may be desired from the viewpoint of design performance that the color distribution of light emitted from the illumination body not be uniform but exhibit gradation.

An object of the present invention is therefore to provide an illumination body that emits light whose color distribution exhibits gradation while being irradiated with light.

SOLUTION TO PROBLEM

The invention is as follows:

1. An illumination body having a light source, containing a light generating device and a particle dispersion body including a matrix and particles, an end surface of the particle dispersion body being irradiated with light emitted from the light generating device; in which the particle dispersion body satisfies the following items (1a) to (4a):

(1a) a length in a direction in which the light coming from the light generating device is allowed to pass is longer than or equal to 20 mm;
(2a) a refractive index difference between the matrix and the particles is larger than or equal to 0.1;
(3a) an average particle diameter, a half width, and a particle density of the particles are 10 to 50 nm, 10 to 30 nm, and 150 to 400 particles/$\mu$m$^2$, respectively; and
(4a) a change of a dominant wavelength Dw per 200 mm is larger than or equal to 10 nm in the direction in which the light coming from the light generating device is allowed to pass, the change being determined by the following method:
(method) the dominant wavelength Dw with a standard C light source that is prescribed in JIS Z 8701: 1999 is determined by replacing a transmittance, prescribed in JIS Z 8701: 1999, of the particle dispersion body with a transmittance change per 1 mm of the particle dispersion body.

2. The illumination body having a light source according to item 1, in which the particle dispersion body has a haze value of 1% or larger and 30% or smaller as measured according to JIS K 7136: 2000 in a direction that is perpendicular to the direction in which the light coming from the light generating device is allowed to pass.

3. The illumination body having a light source according to item 1 or 2, in which the particle dispersion body has a visible light transmittance Tv of 67% or larger and 91% or smaller in terms of 10 mm in thickness, as measured according to JIS R 3106: 2019.

4. The illumination body having a light source according to any one of items 1 to 3, in which the particle dispersion body is a phase-separated glass.

5. The illumination body having a light source according to item 4, in which the phase-separated glass is a binodal phase-separated glass.

ADVANTAGEOUS EFFECTS OF INVENTION

The illumination body having a light source according to the invention, includes, as the illumination body, the particle dispersion body that is including the matrix and the particles and in which the refractive index difference between the matrix and the particles, and the average particle diameter, the particle distribution (half width), and the particle density of the particles are within particular ranges. Therefore, the color distribution of light that is emitted from the particle dispersion body while it is irradiated with light emitted from the light-generating device exhibits gradation. As a result, when applied to a vehicular glass, a glass for a house, an interior element, etc., the invention can realize an illumination body that provides superior design performance while irradiated with light.

BRIEF DESCRIPTION OF DRAWING

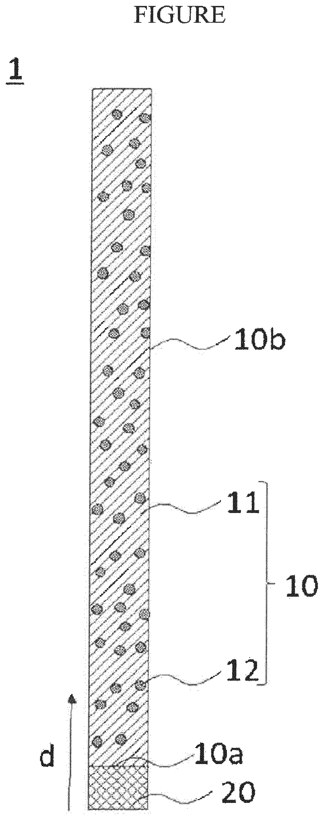

[FIGURE] The FIGURE is a schematic sectional view illustrating the configuration of an illumination body having a light source according to the embodiment.

DESCRIPTION OF EMBODIMENT

Although the present invention will be hereinafter described in detail, the invention is not limited to the following embodiment and can be implemented so as to be modified in a desired manner without departing from the spirit and scope of the invention. The symbol "-" or the word "to" used to indicate a numerical value range is used to include numerical values written before and after it as a lower limit value and an upper limit value, respectively.

As illustrated in the FIGURE, an illumination body 1 having a light source according to the embodiment includes a light generating device 20 and a particle dispersion body 10 that is including a matrix 11 and particles 12.

<Particle dispersion body>

The particle dispersion body 10 has a prescribed thickness and has an end surface 10a extending in the thickness direction (plate thickness direction) and a major surface 10b extending in the length direction. The length of the particle dispersion body 10 in the direction in which light coming from the light generating device 20 is allowed to pass (i.e., the direction denoted by arrow d in the FIGURE) is 20 mm or longer, preferably 50 mm or longer, even preferably 100 mm or longer, and further preferably 200 mm or longer. Since this length is longer than or equal to 20 mm, the color distribution of light is allowed to exhibit gradation easily. Although there are no particular limitations on the upper limit of this length, typically it is preferable that the length be 2,000 mm or shorter.

The particle dispersion body 10 functions as an illumination body. When the end surface 10a of the particle dispersion body 10 is irradiated with light emitted from the light generating device 20, the light travels through the inside of the particle dispersion body 10 and is scattered by the particles 12. When the light hits a particle that is sufficiently smaller than its wavelength (e.g., 1/10 of the wavelength), resulting scattered light is influenced by the wavelength and a phenomenon called Rayleigh scattering occurs. Since the scattering coefficient of Rayleigh scattering is in inverse proportion to the fourth power of the wavelength, light that is shorter in wavelength (e.g., blue light) is scattered more easily. The illumination body 1 having a light source according to the embodiment utilizes the Rayleigh scattering, so that the color distribution of light that is output from the particle dispersion body 10 while it is irradiated with light emitted from the light generating device 20 exhibits gradation, thereby provides superior design performance.

As described later, the fact that the color distribution of the light exhibits gradation in the illumination body 1 having a light source according to the embodiment can be confirmed on the basis of a change of a dominant wavelength Dw of the light that is output from the particle dispersion body 10 while it is irradiated with light.

In a specific embodiment, the change of the dominant wavelength Dw per 200 mm in the direction in which light coming from the light generating device is allowed to pass, the change being determined by the following method, should be 10 nm or larger, preferably 20 nm or larger, even preferably 50 nm or larger, and further preferably 100 nm or larger. Since the change of the dominant wavelength Dw is 10 nm or larger, the color distribution of light exhibits gradation that provides superior design performance.

(Method) A dominant wavelength Dw with a standard C light source that is prescribed in JIS Z 8701: 1999 is determined by replacing a transmittance, prescribed in JIS Z 8701: 1999, of the particle dispersion body with a transmittance change per 1 mm of the particle dispersion body.

In replacing the transmittance, prescribed in JIS Z 8701: 1999, of the particle dispersion body with a transmittance change per 1 mm of the particle dispersion body, a transmittance of the particle dispersion body having a thickness of t mm in its thickness direction is measured and $\Delta T$ at a position of X mm from the end of the particle dispersion body in the direction in which light coming from the light generating device is allowed to pass is calculated according to the following equation. The term "transmittance" as used herein means a spectral transmittance. The transmittance is measured by a spectral photometer.

[Formula 1]

$$\Delta T = T_{x+1} - T_x = 10^\wedge \left[ -\left\{ (-\log T + \log R) \times \frac{X+1}{t} - \log R \right\} \right] - 10^\wedge \left[ -\left\{ (-\log T + \log R) \times \frac{X}{t} - \log R \right\} \right]$$

The definitions of the terms used in the above equation are as follows:

$\Delta T$: a transmittance change per 1 mm of the particle dispersion body in the direction in which light coming from the light generating device is allowed to pass;

$T_{x+1}$: a transmittance at a position that is distant from the end of the particle dispersion body by (X + 1) mm in the direction in which light coming from the light generating device is allowed to pass;

$T_x$: a transmittance at a position that is distant from the end of the particle dispersion body by X mm in the direction in which light coming from the light generating device is allowed to pass;

T: a transmittance of the particle dispersion body having the thickness of t mm in its thickness direction; and

R: a reflectance of the particle dispersion body having the thickness of t mm in its thickness direction.

The reason why a color distribution of the light exhibits gradation can be confirmed using a change of a dominant wavelength Dw that is determined from a transmittance change as mentioned above is as follows. For example, a transmittance change ($\Delta T$) is calculated by subtracting a transmittance at a position that is distant from the end of the particle dispersion body by (X + 1) mm from a transmittance at a position that is distant from the end of the particle dispersion body by X mm in the direction (indicated by arrow d in the FIGURE) in which light emitted from the light generating device is allowed to pass. This transmittance change corresponds to an amount of light (e.g., blue light) having a color that changes due to a color change caused by the position change from X mm to (X + 1) mm and also corresponds to light that is emitted to the outside by scattering, Thus, a color distribution change of light emitted from the particle dispersion body while it is irradiated with light can be checked by determining a dominant wavelength Dw by introducing the transmittance change into the xy color coordinate system and evaluating a change of the dominant wavelength Dw.

In the illumination body 1 having a light source according to the embodiment, it is preferable that the haze value of the particle dispersion body 10 is 30% or smaller, even preferably 20% or smaller, and further preferably 10% or smaller, as measured according to JIS K 7136: 2000 in the direction that is perpendicular to the direction in which light coming from the light generating device 20 is allowed to pass. A sense of transparency can be obtained in the case where the haze value is 30% or smaller. On the other hand, it is preferable that the haze value of the particle dispersion body 10 be 1% or larger, even preferably 3% or larger, and further preferably 5% or larger. A sense of presence of cloudiness can be obtained in the case where the haze value is 1% or larger.

It is preferable that the thickness of the particle dispersion body 10 in the thickness direction be 1 to 200 mm. The strength can be increased easily in the case where the thickness of the particle dispersion body 10 is larger than or equal to 1 mm. It is even preferable that the thickness of the particle dispersion body 10 be 2 mm or larger, further preferably 2.5 mm or larger. On the other hand, the weight of the particle dispersion body 10 can be decreased easily in the case where the thickness of the particle dispersion body 10 is smaller than or equal to 200 mm. It is even preferable that the thickness of the particle dispersion body 10 be 150 mm or smaller, further preferably 100 mm or smaller.

«Matrix»

Examples of the matrix 11 are a glass and a resin. There are no particular limitations on the glass. Examples of the glass include a glass shaped into a flat plate shape by a float method or a fusion method, a bent glass shaped into a curved shape by shaping such a flat-plate-shaped glass by gravity shaping, press molding, or the like, a glass shaped by flowing molten glass into a die, and a glass obtained by integrating glass cullet. A kind of glass can be selected as appropriate according to a use from soda-lime glass, aluminosilicate glass, alkali-free glass, etc.

In the case where the glass is soda-lime glass, it may be either green glass or clear glass. Furthermore, it may be a strengthened glass that has a compressive stress layer adjacent to the glass surface and a tensile stress layer inside the glass. The strengthened glass may be either a chemically strengthened glass or an air-cooling tempered glass (physically strengthened glass).

Examples of the resin include fluororesin, silicone resin, acrylic resin, and transparent polyimide, among which fluororesin and silicone resin are preferable because of high durability.

From the viewpoint of scattering light sufficiently, the difference between refractive index of the matrix 11 and that of the particles 12 (refractive index difference) is 0.1 or larger, even preferably 0.12 or larger and further preferably 0.15 or larger. Although there are no particular limitations on the upper limit of the refractive index difference, from the viewpoint of the light transmittance of the particle dispersion body 10, it is preferable that the refractive index difference be 2.0 or smaller.

«Particles»

Examples of the particles 12 include fine particles of titanium oxide, zirconium oxide, and aluminum oxide, fine particles of glass, fine particles of porous silica and hollow silica, and acrylic organic fine particles, acryl-styrene organic fine particles, and melamine organic fine particles. Another example is particles in which mica, silica, or the like is covered with the above-mentioned fine particles such as titanium oxide, for example.

From the viewpoint of allowing the color distribution of light to exhibit gradation when the particles 12 are irradiated with light, their average particle diameter is 50 nm or smaller, preferably 30 nm or smaller and even preferably 20 nm or smaller. On the other hand, from the viewpoint of obtaining satisfactory color dispersion performance when being irradiated with light, their average particle diameter is 10 nm or larger, preferably 12 nm or larger and even preferably 15 nm or larger.

In this specification, the average particle diameter means an average particle diameter obtained by observing particles 12 by a SEM (scanning electron microscope), measuring particle diameters of at least 10 particles, and calculating their average. In the case where a phase-separated glass (described later) is used as the particle dispersion body 10, the average particle diameter of a dispersed phase that is particles 12 means a diameter of one phase of a binodal state if the one phase is spherical.

From the viewpoint of making clear the gradation of a color distribution of light during irradiation with light, the half width of a particle distribution of the particle dispersion body 10 is 30 nm or smaller, preferably 25 nm or smaller and even preferably 20 nm or smaller. On the other hand, from the viewpoint of obtaining satisfactory light scattering performance while it is irradiated with light, the half width is 10 nm or larger, preferably 12 nm or larger and even preferably 15 nm or larger.

From the viewpoint of allowing the color distribution of light to exhibit gradation while the particles 12 in the particle dispersion body 10 are irradiated with light, their density (particle density) is 150 particles/$\mu m^2$ or higher, preferably 180 particles /$\mu m^2$ or higher and even preferably 200 particles /$\mu m^2$ or higher. On the other hand, from the viewpoint of keeping the haze value of the particle dispersion body 10 small, the particle density is 400 particles /$\mu m^2$ or lower, preferably 300 particles /$\mu m^2$ or lower and even preferably 250 particles /$\mu m^2$ or lower.

Since light needs to propagate over a long distance while the particle dispersion body 10 is irradiated with light, it is preferable that its visible light transmittance Tv in terms of 10 mm in thickness (i.e., Tv as converted to a value at a thickness of 10 mm) be 67% or higher, even preferably 70% or higher, further preferably 75% or higher, and even further preferably 80% or higher. Although there are no particular limitations on the upper limit, from the viewpoint of obtaining satisfactory color dispersion performance during irradiation with light, it is preferable that its visible light transmittance Tv be 91% or lower, even preferably 88% or lower, and further preferably 85% or lower. The visible light transmittance Tv is measured according to JIS R 3106: 2019.

Although there are no particular limitations on the particle dispersion body 10 as long as it should include the matrix 11 and the particles 12 and can scatter light. The particle dispersion body 10 may be in a form such as a sol-gel film or glass paste.

The particle dispersion body 10 may be a phase-separated glass. The phase separation of glass is a phenomenon that single phase glass is separated into two or more glass phases. Examples of a method for causing phase separation of glass include a method of subjecting glass to heat treatment after it is shaped and a method of holding the temperature of glass higher than or equal to a phase separation temperature before the glass is shaped.

As for a typical condition of heat treatment that is performed to cause phase separation of glass after its shaping, it is preferable that the heat treatment temperature be higher than its glass transition temperature by 50°C or more, even preferably by 100°C or more. On the other hand, from the viewpoint of making glass less prone to deform, it is preferable that the heat treatment temperature be lower than or equal to a temperature that is higher than its glass transition temperature by 400°C, even preferably lower than or equal to a temperature that is higher than its glass transition temperature by 300°C. To control the particle diameter, it is preferable that the glass heat treatment time be 0.5 hr or longer, even preferably 1 hr or longer. From the viewpoint of mass productivity, it is preferable that the glass heat treatment time be 36 hr or shorter, even preferably 24 hr or shorter, and further preferably 12 hr or shorter. A preferable method for holding the temperature of glass higher than the phase separation temperature before shaping it is a method to cause phase separation of glass by holding its temperature lower than or equal to a phase separation start temperature after holding its temperature higher than or equal to the phase separation start temperature.

Whether glass is phase-separated or not can be judged using a SEM. Where glass is phase-separated, it can be observed using a SEM that the glass is separated into two or more phases.

Examples of the phase-separated glass include a binodal phase-separated glass being in a binodal state and a spinodal phase-separated glass being in a spinodal state. The binodal state means a phase-separated state that is produced by a nuclei generation-growth mechanism and in which separated phases are generally spherical. The spinodal state means a phase-separated state in which separated phases have a certain degree of regularity and are intertwined together continuously in three dimensions. It is particularly preferable that the particle dispersion body 10 be a binodal phase-separated glass. Where a binodal phase-separated glass is used as the particle dispersion body 10, separated phases of the binodal phase-separated glass can function as the particles 12.

The gradation of a color distribution of light during light irradiation can be adjusted by characteristics of the matrix 11 and the particles 12 that constitute the particle dispersion body 10. Specifically, for example, the kinds of matrix 11 and particles 12 that constitute the particle dispersion body 10, the particle diameter, half width, and density of the particles 12, and other factors are adjusted as appropriate.

«Light generating device»

The illumination body 1 having a light source according to the embodiment includes the particle dispersion body 10 which is the illumination body and the light generating device 20, and the light generating device 20 irradiates an end surface of the particle dispersion body 10 with light. There are no particular limitations on the light generating device 20 as long as it can irradiate an end surface of the particle dispersion body 10 with light, and the light generating device 20 may be a known device.

Examples of the light generating device 20 (light source) include a device that is equipped with plural light-emitting elements and a long flexible board that is mounted with the light-emitting elements. Examples of the light-emitting element include an element that is composed of a light-emitting diode and a housing that surrounds it and is equipped with a reflection surface for guiding light to a prescribed direction.

Examples of the flexible board include a resin (e.g., polyimide) flexible board and a rigid board such as a glass epoxy board. Another example is a device including a light source and an optical fiber, in which case the light source is disposed to face one end of the optical fiber.

It is preferable that an end surface of the particle dispersion body 10 be irradiated with light emitted from such a light generating device 20. Although a gap may exist between the light generating device 20 and the end surface of the particle dispersion body 10, it is preferable from the viewpoint of allowing light to be entered efficiently that the light generating device 20 be in contact with the end surface of the particle dispersion body 10, that is, there exist no gap between them. In this case, it is even preferable that the light generating device 20 be fixed to the end surface of the particle dispersion body 10 with an adhesive or the like because the light generating device 20 and the end surface of the particle dispersion body 10 can be protected in addition to the above-mentioned advantage of efficient light incidence.

To facilitate entrance of light from the light generating device 20 to the particle dispersion body 10, it is preferable that the refractive index of the adhesive used for the above purpose be lower than that of the particle dispersion body 10. Preferable examples of such an adhesive include a silicone adhesive, an epoxy adhesive, and an acryl adhesive.

EXAMPLES

Although the invention will be described in a specific manner using Examples, the invention is not limited to them.

Various test bodies of the illumination body 1 having a light source were manufactured and evaluated. Examples 1 and 2 are Inventive Examples and Examples 3 and 4 are Comparative Examples.

[Manufacture of test bodies]

<Illumination body>

(Examples 1, 2, and 3)

A glass plate made of a binodal phase-separated glass measuring 50 mm (width) × 30 mm (thickness in the plate thickness direction) × 200 mm (length) was used as the particle dispersion body 10 which is the illumination body.

(Example 4)

A glass plate made of a glass having no separated phases and measuring 50 mm (width) × 30 mm (thickness in the plate thickness direction) × 200 mm (length) was used as the illumination body.

<Light generating device>

A tape LED (color temperature: 4,000 K, Ra98) in which LED spheres were arranged at intervals of 8 mm was used as the light generating device. The output power was DC 12 V and 1.5 A.
A test body of the illumination body 1 having a light source was manufactured using the above materials and was evaluated by the following evaluation methods.

<Evaluation methods>

Characteristics of the test body manufactured in each of the above Examples 1-4 were evaluated by the following methods. Results are shown in Table 1.

(Average particle diameter, particle density, half width)

In each of Examples 1-3, after the glass plate was cut at normal temperature and the surfaces and cut surfaces of the sample were subjected to mechanical polishing, a platinum layer was formed on the surfaces (about 5 nm) and on the cut surfaces (about 2 nm) and a cross section was obtained by FIB (focused ion beam) processing. The thus-obtained cross section was observed and analyzed by a SEM-EDX ("SU8230" produced by Hitachi High-Tech Corporation).
Conditions of the observation and analysis by the SEM-EDX were as follows:
(Observation) Acceleration voltage: 1.5 kV, probe current: normal, emission current: 10 $\mu$A, detector condition: SE (U, LA100), WD: 2 mm, and without conduction coating.
(Analysis) Acceleration voltage: 6.0 kV, probe current: high, emission current: 10 $\mu$A, detector condition: SE (U, LA100), WD: 10.5 mm, and C coat: about 15 nm.
A density of particles 12 (particle density) and a half width were measured from a SEM-EDX observation picture. The term "particle density" means a concentration of particles 12 in the particle dispersion body 10. Furthermore, after the measurement of particle diameters of 10 particles or more of particles 12 from the observation picture, an average particle diameter was evaluated by calculating an average of those particle diameters. For Examples 1 and 2, an average particle diameter of separated-phase particles was evaluated by measuring a particle diameter with an assumption that separated-phase particles in an observation picture were circular by a separated figure edition function of image analysis software ("WinROOF" produced by Mitani Corporation), then performing such a measurement on 10 particles or more of the separated-phase particles in the same observation picture, and calculating an average thereof.

(Refractive index)

A refractive index was measured under the following conditions using an Abbe refraction meter (product name "KPR-2000" produced by Shimadzu Corporation) according to JIS K7142: 2014.

<Measurement conditions>

- He light source
- Wavelength: 587.6 nm

(Dominant wavelength Dw)

A dominant wavelength Dw with a standard C light source that is prescribed in JIS Z 8701: 1999 was determined by replacing a transmittance, prescribed in JIS Z 8701: 1999, of the particle dispersion body with a transmittance change per 1 mm of the particle dispersion body 10. The transmittance was measured using a spectral photometer ("Lambda950" produced by PerkinElmer). The term "Dw at 20 mm from end surface" in Table 1 means Dw at a position that is 20 mm distant from the end surface of the particle dispersion body 10. "ΔDw" in Table 1 means the difference between "Dw at 220 mm from end surface" and "Dw at 20 mm from end surface."

(Visible light transmittance Tv)

A visible light transmittance was measured using the spectral photometer ("Lambda950" produced by PerkinElmer) according to JIS R 3106: 2019. "Tv" in Table 1 is a value as converted into a value at a thickness of 10 mm.

(Haze value)

A haze value of a manufactured illumination body having a thickness of 30 mm was measured using a haze meter ("HM-65W" produced by Murakami Color Research Laboratory) according to JIS K 7136: 2000.

[Table 1]

Table 1

| | Example 1 | Example 2 | Example 3 | Example 4 |
|---|---|---|---|---|
| Average particle diameter (nm) | 18 | 24 | 55 | No scattering bodies |
| Half width (nm) | 25 | 20 | 60 | |
| Particle density (particles/$\mu$m$^2$) | 233 | 236 | 96 | |
| Refractive index of particles: n1 | 1.45 | 1.45 | 1.45 | |
| Refractive index of matrix: n2 | 1.577 | 1.577 | 1.577 | |
| Refractive index difference: n2 - n1 | 0.127 | 0.127 | 0.127 | |
| Dw (nm) at 20 mm from end surface | 473 | 475 | 576 | 472 |
| Dw (nm) at 220 mm from end surface | 570 | 576 | 635 | 474 |
| ΔDw (nm) | 97 | 101 | 59 | 2 |
| Tv (%, converted into value at thickness of 10 mm) | 90.3 | 89.3 | 66.8 | 91.9 |
| Haze value (%) | 3.6 | 49.7 | 71.2 | 0.2 |
| Color distribution of light during irradiation with light | Gradation was exhibited | Gradation was exhibited | Uniform | Uniform |

As shown in Table 1, in the test bodies of Examples 1 and 2 which are Inventive Examples, the average particle diameter of the particles contained in the particle dispersion body was 10 to 50 nm, the half width was 10 to 30 nm, the particle density was 150 to 400 particles/$\mu$m$^2$, and the change per 200 mm of the dominant wavelength Dw was larger than or equal to 10 nm in the direction in which light coming from the light generating device is allowed to pass. Because of these features, light emitted from the particle dispersion body during irradiation with light exhibited gradation.

In the test body of Example 3 which is a Comparative Example, the average particle diameter of the particles contained in the particle dispersion body was larger than 50 nm, the half width was larger than 30 nm, and the particle density was lower than 150 particles/$\mu$m$^2$. Because of these features, light emitted from the particle dispersion body during irradiation with light did not exhibit gradation and looked uniform.

In the test body of Example 4 which is a Comparative Example, the illumination body was not a particle dispersion body as defined in the invention and the change per 200 mm of the dominant wavelength Dw was smaller than 10 nm in the direction in which light coming from the light generating device is allowed to pass. Because of these features, light emitted from the particle dispersion body during irradiation with light did not exhibit gradation and looked uniform.

As described above, light emitted from the particle dispersion body during irradiation with light exhibited gradation by adjusting the structure of the particle dispersion body which was used as the illumination body to a preferable one and making the change per 200 mm of the dominant wavelength Dw larger than or equal to 10 nm in the direction in which light coming from the light generating device is allowed to pass.

Although the invention has been described in detail by referring to the particular embodiment, it is apparent to those skilled in the art that various changes and modifications are possible without departing from the spirit and scope of the invention. The present application is based on Japanese Patent Application No. 2020-014744 filed on January 31, 2020, the disclosure of which is incorporated herein by reference.

INDUSTRIAL APPLICABILITY

Providing high transparency while not being irradiated with light and also providing design performance by gradation of a color distribution of light while being irradiated with light, the illumination body having a light source according to the invention is superior in beauty while not being irradiated with light and design performance while being irradiated with light. As such, the illumination body having a light source according to the invention is very useful for a broad range of uses such as vehicular pattered glasses, welcome lights, digital signage, and decoration of doors and windows.

DESCRIPTION OF SYMBOLS

1: Illumination body (having a light source)
10: Particle dispersion body
11: Matrix
12: Particles
20: Light generating device

**Claims**

1. An illumination body having a light source, comprising a light generating device and a particle dispersion body including a matrix and particles, an end surface of the particle dispersion body being irradiated with light emitted from the light generating device; wherein the particle dispersion body satisfies the following items (1a) to (4a):

    (1a) a length in a direction in which the light coming from the light generating device is allowed to pass is longer than or equal to 20 mm;
    (2a) a refractive index difference between the matrix and the particles is larger than or equal to 0.1;
    (3a) an average particle diameter, a half width, and a particle density of the particles are 10 to 50 nm, 10 to 30 nm, and 150 to 400 particles/$\mu$m$^2$, respectively; and
    (4a) a change of a dominant wavelength Dw per 200 mm is larger than or equal to 10 nm in the direction in which the light coming from the light generating device is allowed to pass, the change being determined by the following method:
    (method) the dominant wavelength Dw with a standard C light source that is prescribed in JIS Z 8701: 1999 is determined by replacing a transmittance, prescribed in JIS Z 8701: 1999, of the particle dispersion body with a transmittance change per 1 mm of the particle dispersion body.

2. The illumination body having a light source according to claim 1, wherein the particle dispersion body has a haze value of 1% or larger and 30% or smaller as measured according to JIS K 7136: 2000 in a direction that is perpendicular to the direction in which the light coming from the light generating device is allowed to pass.

3. The illumination body having a light source according to claim 1 or 2, wherein the particle dispersion body has a visible light transmittance Tv of 67% or larger and 91% or smaller in terms of 10 mm in thickness, as measured according to JIS R 3106: 2019.

4. The illumination body having a light source according to any one of claims 1 to 3, wherein the particle dispersion body is a phase-separated glass.

5. The illumination body having a light source according to claim 4, wherein the phase-separated glass is a binodal phase-separated glass.

FIGURE

<u>1</u>

10b

11
10
12

d

10a

20

## INTERNATIONAL SEARCH REPORT

| International application No. |
|---|
| PCT/JP2021/002424 |

**A. CLASSIFICATION OF SUBJECT MATTER**
Int.Cl. F21Y115/10(2016.01)n, G02B5/02(2006.01)i, F21S2/00(2016.01)i
FI: F21S2/00432, G02B5/02B, F21Y115:10

According to International Patent Classification (IPC) or to both national classification and IPC

**B. FIELDS SEARCHED**

Minimum documentation searched (classification system followed by classification symbols)
Int.Cl. F21Y115/10, G02B5/02, F21S2/00

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-75352 A (DAI NIPPON PRINTING CO., LTD.) 16 May 2019 (2019-05-16), entire text, all drawings | 1-5 |
| A | JP 2006-294343 A (MITSUBISHI RAYON CO., LTD.) 26 October 2006 (2006-10-26), entire text, all drawings | 1-5 |
| A | WO 2011/104765 A1 (KURARAY CO., LTD.) 01 September 2011 (2011-09-01), entire text, all drawings | 1-5 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 March 2021 | 23 March 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/002424

| | | |
|---|---|---|
| JP 2019-75352 A | 16 May 2019 | (Family: none) |
| JP 2006-294343 A | 26 October 2006 | (Family: none) |
| WO 2011/104765 A1 | 01 September 2011 | CN 102770704 A<br>KR 10-2012-0120935 A<br>TW 201129832 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150298601 A
- JP 2015525429 T
- JP 2020014744 A